# EUROPEAN PATENT APPLICATION

(11) **EP 4 109 480 A1**
(43) Date of publication of application: **28.12.2022**
(21) Application number: 21757139.7
(22) Date of filing: 19.01.2021
(51) Int. Cl.: H01G 17/00, H01G 2/02, H01G 2/06, H01G 2/10, H01G 4/38, H01G 4/40, H01G 9/08

(54) **ELECTRONIC COMPONENT HOLDER AND ELECTRICAL INSTRUMENT**

(30) Priority: 21.02.2020 JP 2020028825
(71) Applicant: Panasonic Intellectual Property Management Co., Ltd., Osaka-shi, Osaka 540-6207 (JP)
(72) Inventor: TAHARA Koki, Osaka 540-6207 (JP); SAKAI Takuya, Osaka 540-6207 (JP); SATO Yuuki, Osaka 540-6207 (JP)
(74) Representative: SSM Sandmair
(86) International application number: PCT/JP2021/001561
(87) International publication number: WO 2021/166520

(57) **Abstract**

An electronic component holder includes a fixing part and a holder body. The fixing part is fixed to a substrate. The holder body includes a plurality of container recesses. The plurality of container recesses are open towards one surface (first face) of the substrate. A plurality of electronic components are disposed on the one surface of the substrate. Each of the plurality of container recesses holds at least one corresponding electronic component among the plurality of electronic components.

## Description

### TECHNICAL FIELD

The present disclosure generally relates to an electronic component holder and an electrical device. More specifically, the present disclosure relates to an electronic component holder that holds a plurality of electronic components, and an electrical device including the electronic component holder.

### BACKGROUND ART

A capacitor holder (electronic component holder) described in PTL 1 includes a first holder, a second holder attached to the first holder, and a terminal. The first holder is attached with a main body of the capacitor and singly holds the main body. The terminal is held by the second holder. The terminal includes a contact point in contact with a lead of the capacitor.

Here, vibration may be applied to an electronic component such as a capacitor from the outside depending on a use environment of the electronic component or the like. However, the capacitor holder (electronic component holder) described in PTL 1 is not provided with a sufficient countermeasure against vibration.

### Citation List

### Patent Literature

PTL 1: Unexamined Japanese Patent Publication No. 2019-016699

### SUMMARY OF THE INVENTION

An object of the present disclosure is to provide an electronic component holder capable of improving vibration resistance of a plurality of electronic components and an electrical device.

An electronic component holder according to one aspect of the present disclosure includes a fixing part and a holder body. The fixing part is fixed to the substrate. The holder body includes a plurality of container recesses. The plurality of container recesses are open towards one surface of the substrate. A plurality of electronic components are fixed to the substrate. the plurality of electronic components are disposed on the one surface of the substrate. Each of the plurality of container recesses holds at least one corresponding electronic component among the plurality of electronic components.

An electrical device according to an aspect of the present disclosure includes the electronic component holder, the substrate, and the plurality of electronic components.

The present disclosure has an advantage that vibration resistance of a plurality of electronic components can improve.

### BRIEF DESCRIPTION OF THE DRAWINGS

Fig. 1 is a perspective view of an electrical device including an electronic component holder according to an exemplary embodiment as viewed from the left side.
Fig. 2 is a perspective view of the electrical device as viewed from the right side.
Fig. 3 is an exploded perspective view of the electrical device.
Fig. 4 is a rear view of the electrical device.
Fig. 5 is a rear view of the electronic component holder.
Fig. 6 is a perspective view of the electronic component holder as viewed from the rear side.
Fig. 7 is a right side view of the electrical device.

### DESCRIPTION OF EMBODIMENT

### (Exemplary embodiment)

Hereinafter, electronic component holder 2 according to an exemplary embodiment and electrical device 1 will be described with reference to the drawings. The exemplary embodiment described below is merely one of various exemplary embodiments of the present disclosure. The following exemplary embodiment can be variously modified according to design and the like as long as an object of the present disclosure can be achieved. Each drawing described in the following exemplary embodiment is a schematic view, and each ratio of the size and the thickness of each component in the drawing does not necessarily reflect the actual dimensional ratio.

### (1) Outline of electronic component holder

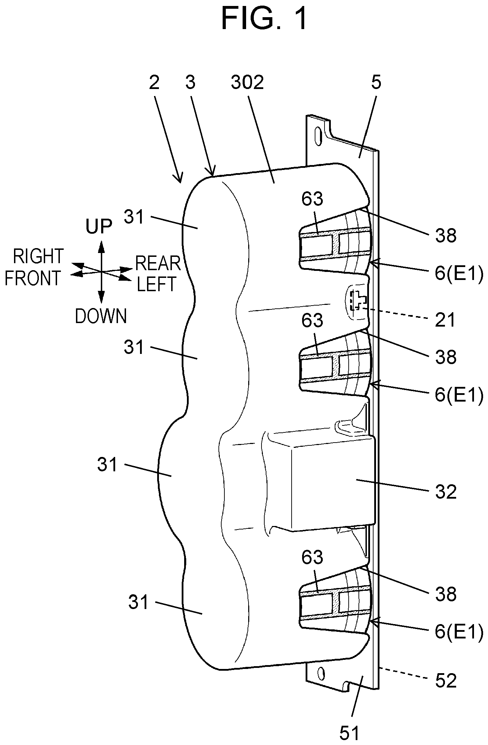

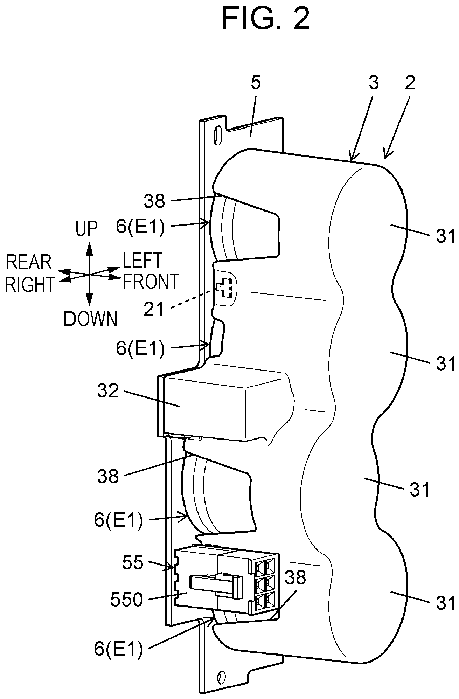

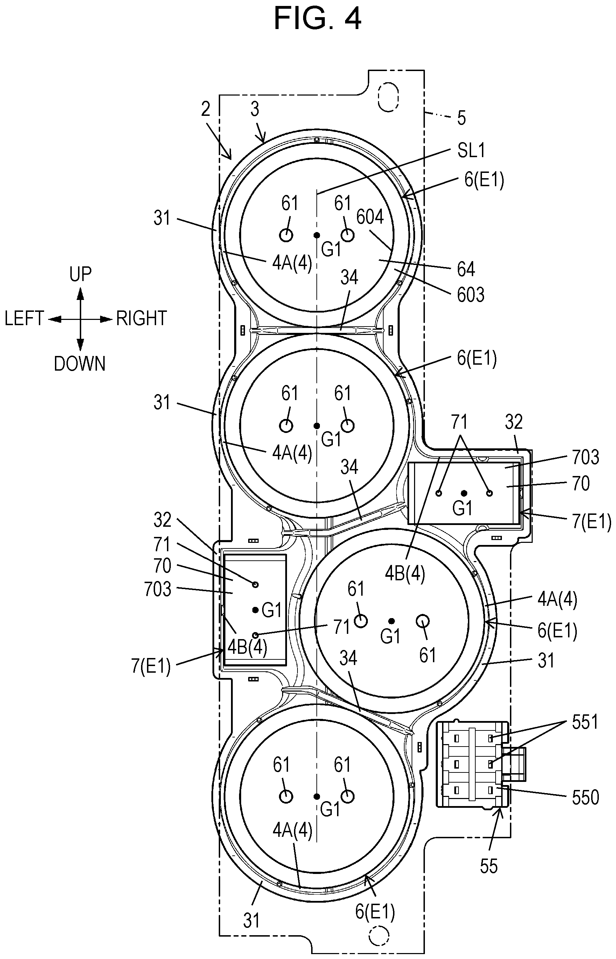

Fig. 1 is a perspective view of electrical device 1 including electronic component holder 2 according to an exemplary embodiment as viewed from the left side. Fig. 2 is a perspective view of the electrical device as viewed from the right side. As illustrated in Figs. 1 and 2, electronic component holder 2 includes fixing part 21 and holder body 3. Fixing part 21 is fixed to substrate 5. Holder body 3 includes a plurality of container recesses 4 (see Fig. 4). The plurality of container recesses 4 are open towards one surface (first face 51) of substrate 5. A plurality of electronic components E1 are fixed to substrate 5. The plurality of electronic components E1 are disposed on the one surface of substrate 5. Each of the plurality of container recesses 4 holds at least one corresponding electronic component E1 among the plurality of electronic components E1.

The present exemplary embodiment can improve vibration resistance of the plurality of electronic components E1.

### (2) Electronic component and substrate

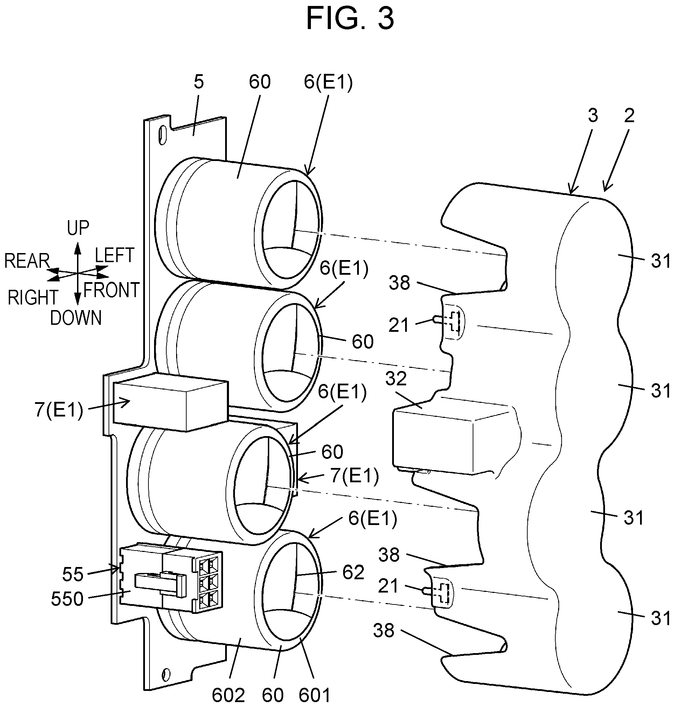

Fig. 3 is an exploded perspective view of electrical device 1 including electronic component holder 2 according to the exemplary embodiment. As illustrated in Fig. 3, the plurality of electronic components E1 include capacitor 6 and resistor 7. The number of capacitors 6 is four, and the number of resistors 7 is two. That is, the number of capacitors 6 is larger than the number of resistors 7. The area occupied by the plurality of capacitors 6 is larger than the area occupied by the plurality of resistors 7 when viewed from the thickness direction of substrate 5.

In the following description, up-down, left-right, and front-rear directions are defined by directions indicated by arrows in Figs. 1 to 7. However, these definitions are not intended to limit directions of electronic component holder 2 and electrical device 1 when they are used. The up-down direction defined here is the longitudinal direction of substrate 5. The left-right direction is the lateral direction of the substrate 5. The front-rear direction is the thickness direction of substrate 5. A side where capacitor 6 is disposed as viewed from substrate 5 is defined as the front, and a side where substrate 5 is disposed as viewed from capacitor 6 is defined as the rear.

Fig. 4 is a rear view of electrical device 1 including electronic component holder 2 according to the exemplary embodiment. In Fig. 4, substrate 5 is transparent and indicated by a two-dot chain line.

More specifically, each capacitor 6 is an electrolytic capacitor. Capacitor 6 is a lead component. As illustrated in Figs. 3 and 4, capacitor 6 includes electronic component body 60, a capacitor element (not shown) contained inside electronic component body 60, and two leads 61.

Electronic component body 60 has a bottomed cylindrical shape. The outer shape of electronic component body 60 is a circular column shape. Electronic component body 60 includes top face 601 (front face), side face 602, and pull-out face 603 (rear face). Top face 601 and pull-out face 603 have circular shapes. Pull-out face 603 is a face facing substrate 5. Side face 602 connects the outer edge of top face 601 and pull-out face 603. Electronic component body 60 includes a containing space for containing the capacitor element therein. Electronic component body 60 includes opening 604 on pull-out face 603.

Two leads 61 are electrically connected to the capacitor element. Two leads 61 protrude from pull-out face 603 of electronic component body 60. More specifically, two leads 61 protrude from the inside of electronic component body 60 to the outside of electronic component body 60 through opening 604. Two leads 61 are fixed to substrate 5 by soldering.

An explosion-proof valve (also referred to as a pressure valve) is provided in an electronic component such as an electrolytic capacitor. The explosion-proof valve opens when the pressure in the package of the electronic component exceeds the withstand pressure and releases the gas in the package. Capacitor 6 includes explosion-proof valve 62. Explosion-proof valve 62 is provided on top face 601 of electronic component body 60 (package).

Capacitor 6 includes display unit 63 (see Fig. 1). Display unit 63 includes a predetermined display. An example of the display by display unit 63 is the polarity, capacitance, breakdown voltage, and the like of capacitor 6. Display unit 63 is provided, for example, by adding letters, numbers, symbols, patterns, or the like to side face 602 of electronic component body 60.

As illustrated in Fig. 4, capacitor 6 further includes sealing member 64 that closes opening 604. A material constituting sealing member 64 is, for example, a rubber material such as ethylene-propylene ether polymer (EPT) or isobutylene-isoprene rubber (IIR), or a resin material such as epoxy resin.

More specifically, resistor 7 is a cement resistor. Resistor 7 is a lead component. Resistor 7 includes electronic component body 70, a resistance element contained in electronic component body 70, and two leads 71.

The resistance element is made of metal or the like. Electronic component body 70 is a case made of ceramic and contains a resistance element. The outer shape of electronic component body 70 is a rectangular parallelepiped shape. Electronic component body 70 includes pull-out face 703 (rear face). Pull-out face 703 is a face facing substrate 5. Two leads 71 are electrically connected to the resistance element. Two leads 71 protrude from pull-out face 703.

As illustrated in Fig. 1, substrate 5 includes first face 51 and second face 52. First face 51 is a face on one side in the thickness direction of substrate 5. Second face 52 is a face opposite to first face 51. The plurality of electronic components E1 (four capacitors 6 and two resistors 7) are disposed on first face 51. That is, electronic component body 60 of each capacitor 6 and electronic component body 70 of each resistor 7 are disposed on first face 51. Two leads 61 of each capacitor 6 and two leads 71 of each resistor 7 are respectively inserted into lead holes formed in substrate 5, and are soldered to substrate 5 by solder applied to second face 52.

As illustrated in Figs. 2 and 4, connector 55 is mounted on substrate 5. Connector 55 includes terminal block 550 and a plurality of (six in Fig. 4) leads 551. Connector 55 is disposed outside electronic component holder 2 on first face 51. An electric wire is connected to terminal block 550. The plurality of leads 551 protrude from terminal block 550. Each of the plurality of leads 551 is inserted into a lead hole formed in substrate 5 and soldered to substrate 5 by solder applied to second face 52.

### (3) Details of electronic component holder

Holder body 3 is formed of, for example, resin as a material. Holder body 3 is formed of, for example, polyethylene terephthalate as a material. Holder body 3 has electrical insulation. Therefore, providing holder body 3 can enhance insulation between each of the plurality of electronic components E1 and a member disposed around holder body 3 as compared with the case where holder body 3 is not provided.

As illustrated in Figs. 1 and 4, holder body 3 is formed in a box shape in which the rear face (the face facing substrate 5) has an opening. Holder body 3 includes a plurality of (four in Figs. 1 and 4) first containers 31 and a plurality of (two in Fig. 4) second containers 32. The outer shape of each first container 31 is a circular column shape. The plurality of first containers 31 correspond to the plurality of capacitors 6 on a one-to-one basis. Each first container 31 holds corresponding capacitor 6. The outer shape of each second container 32 is a rectangular parallelepiped shape. The plurality of second containers 32 correspond to the plurality of resistors 7 on a one-to-one basis. Each second container 32 holds corresponding resistor 7.

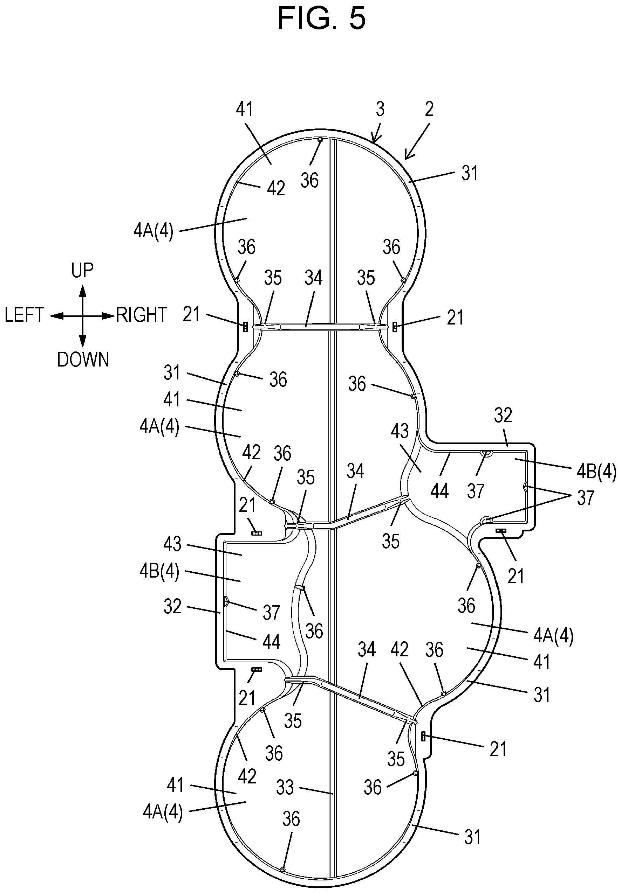

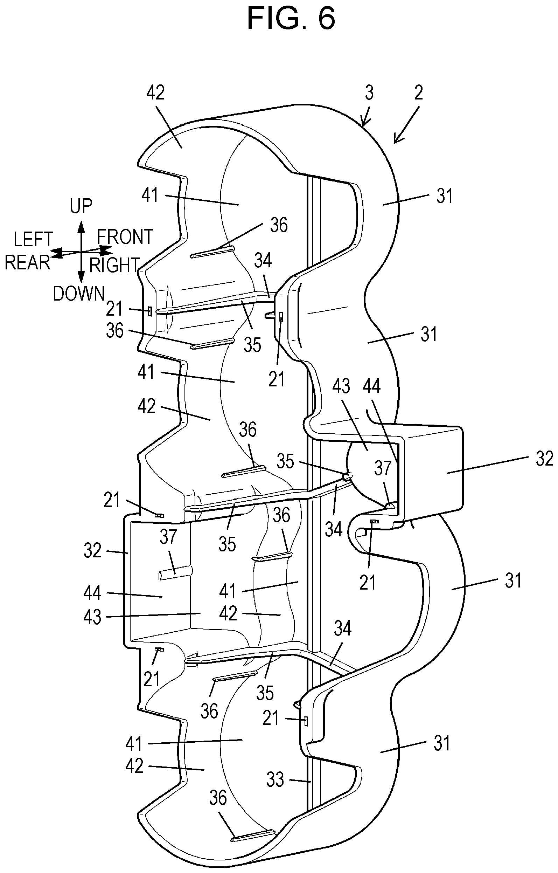

Fig. 5 is a rear view of electronic component holder 2 according to the exemplary embodiment. Fig. 6 is a perspective view of electronic component holder 2 according to the exemplary embodiment as viewed from the rear side. As illustrated in Figs. 4 to 6, holder body 3 includes a plurality of (four in Fig. 4) first container recesses 4A and a plurality of (two in Fig. 4) second container recesses 4B as the plurality of container recesses 4. Each first container recess 4A holds capacitor 6 (first electronic component). Each second container recess 4B holds resistor 7 (second electronic component) having a shape different from that of the first electronic component. The second electronic component is different in weight from the first electronic component. The internal spaces of the plurality of first container recesses 4A and the internal spaces of the plurality of second container recesses 4B are connected to form the internal space of holder body 3.

The plurality of container recesses 4 and the plurality of electronic components E1 correspond to each other on a one-to-one basis. Corresponding one electronic component E1 among the plurality of electronic components E1 is held in each of the plurality of container recesses 4.

The plurality of first container recesses 4A correspond to the plurality of capacitors 6 on a one-to-one basis. Each capacitor 6 is held in corresponding first container recess 4A. The plurality of first container recesses 4A correspond to the plurality of first containers 31 on a one-to-one basis. An inner face of each first container recess 4A includes an inner face of corresponding first container 31. Each first container recess 4A holds corresponding electronic component E1 (capacitor 6) from at least the left and right. That is, each first container recess 4A is provided to sandwich corresponding electronic component E1 (capacitor 6) at least from the left and right.

The shape of first container recess 4A is a shape along the outer shape of capacitor 6. First container recess 4A includes bottom face 41 and inner side face 42 as inner faces. Bottom face 41 has a circular shape. Inner side face 42 extends rearward from bottom face 41. The schematic shape of inner side face 42 is a shape corresponding to the inner peripheral face of a cylinder. Capacitor 6 is surrounded by inner side face 42. Inner side face 42 is not provided at a portion where first container recess 4A and first container recess 4A or second container recess 4B adjacent to the first container recess 4A are connected, except for a side face of first partition wall 34 to be described later.

The plurality of second container recesses 4B correspond to the plurality of resistors 7 on a one-to-one basis. Each resistor 7 is held in corresponding second container recess 4B. Further, the plurality of second container recesses 4B correspond to the plurality of second containers 32 on a one-to-one basis. An inner face of each second container recess 4B includes an inner face of corresponding second container 32. Each second container recess 4B holds corresponding electronic component E1 (resistor 7) at least from the top and bottom. That is, each second container recess 4B is provided to sandwich corresponding electronic component E1 (resistor 7) at least from the top and bottom.

The shape of second container recess 4B is a shape along the outer shape of resistor 7. Second container recess 4B includes bottom face 43 and inner side face 44 as inner faces. Inner side face 44 extends rearward from bottom face 43. When viewed from the front-rear direction, the shape of inner side face 44 is a U-shape having a substantially right-angle corner. Resistor 7 is surrounded by inner side face 44 from at least three directions. Inner side face 44 is not provided at a portion where second container recess 4B and first container recess 4A are connected.

The length (depth) of first container recess 4A in the front-rear direction is longer than the length (depth) of second container recess 4B in the front-rear direction. That is, each first container recess 4A is recessed deeper than second container recess 4B from the rear end of holder body 3.

Holder body 3 includes protrusion 33, a plurality of (three in Fig. 5) first partition walls 34, a plurality of second partition walls 35, a plurality of first ribs 36, and a plurality of second ribs 37.

Protrusion 33 protrudes rearward from bottom faces 41 of the plurality of first container recesses 4A. The protruding amount of protrusion 33 is lower than the height of holder body 3 in the front-rear direction. Protrusion 33 has a rectangular parallelepiped shape. When viewed in the front-rear direction, protrusion 33 is longer in the up-down direction than in the left-right direction. Protrusion 33 is provided over all of the plurality of (four) first container recesses 4A. More specifically, protrusion 33 is provided from the upper end to the lower end of holder body 3.

Protrusion 33 faces top faces 601 (see Fig. 3) of the plurality of capacitors 6. This secures a gap between top face 601 and bottom face 41. Protrusion 33 faces top faces 601 with a gap from explosion-proof valves 62 provided on top faces 601 of the plurality of capacitors 6. Protrusion 33 faces top face 601 with a gap from the entire region of top face 601. Here, it is sufficient that protrusion 33 has a gap from explosion-proof valve 62, and protrusion 33 may be in contact with a part of top face 601 (for example, a region around explosion-proof valve 62 or a portion protruding forward from explosion-proof valve 62).

When viewed from the front-rear direction, each shape of the plurality of first partition walls 34 is a rectangular shape. First partition wall 34 protrudes rearward from bottom faces 41 of the plurality of first container recesses 4A. The protruding amount of each first partition wall 34 is larger than the protruding amount of protrusion 33. Each first partition wall 34 is provided to separate first container recesses 4A adjacent to each other. That is, internal spaces of two first container recesses 4A respectively exist on both sides of each first partition wall 34. The side face of each first partition wall 34 constitutes a part of inner side faces 42 of two first container recesses 4A. As a result, at least a partial range (near bottom face 41) of inner side face 42 is continuous in the circumferential direction (see Figs. 5 and 6).

Second partition walls 35 are connected to both ends of first partition wall 34. Each second partition wall 35 extends rearward from first partition wall 34. The side face of each second partition wall 35 constitutes a part of inner side face 42 of first container recess 4A.

A plurality of (three in Fig. 5) first ribs 36 protrude from inner side face 42 of each first container recess 4A. The plurality of first ribs 36 face side face 602 (see Fig. 3) of capacitor 6 (electronic component body 60). This secures a gap between side face 602 and inner side face 42. The plurality of first ribs 36 may be in contact with side face 602 of capacitor 6 but does not have to be in contact with side face 602 of capacitor 6.

One or a plurality of second ribs 37 protrude from inner side face 44 of each second container recess 4B. In Fig. 5, one second rib 37 protrudes from inner side face 44 of one (left) second container recess 4B of two second container recesses 4B, and three second ribs 37 protrude from inner side face 44 of another (right) second container recess 4B of two second container recesses 4B. Each second rib 37 faces a side face of resistor 7 (electronic component body 70). This secures a gap between resistor 7 and inner side face 44. The plurality of second ribs 37 may be in contact with the side face of resistor 7 but does not have to be in contact with the side face of resistor 7.

Among the plurality of container recesses 4, each of the plurality of first container recesses 4A holds capacitor 6 as a lead component. Each of the plurality of first container recesses 4A holds capacitor 6 in a direction in which pull-out face 603 of electronic component body 60 of capacitor 6 faces first face 51 of substrate 5. That is, capacitor 6 is held such that the axial direction of capacitor 6 having a bottomed cylindrical shape is along the front-rear direction.

Among the plurality of container recesses 4, each of the plurality of second container recesses 4B holds resistor 7 as a lead component. Each of the plurality of second container recesses 4B holds resistor 7 in a direction in which pull-out face 703 of electronic component body 70 of resistor 7 faces first face 51 of substrate 5.

As illustrated in Fig. 1, holder body 3 includes side face 302. Side face 302 is a face along the front-rear direction. Side face 302 has a length across both ends of the plurality of electronic components E1 in the thickness direction (front-rear direction) of substrate 5. In other words, the length from the rear end (the contact surface with substrate 5) of holder body 3 to bottom face 41 is longer than the height (the length in the front-rear direction) of the plurality of electronic components E1 (capacitor 6 and resistor 7). Side face 302 covers the plurality of electronic components E1.

Side face 302 covering the plurality of electronic components E1 can protect the plurality of electronic components E1. Since holder body 3 has electrical insulation, side face 302 covering the plurality of electronic components E1 can enhance insulation between the plurality of electronic components E1 and the surrounding configuration as compared with the case where side face 302 does not cover the plurality of electronic components E1.

Holder body 3 includes a plurality of (six. see Figs. 1 and 2) windows 38 on its side face 302. Each window 38 is a penetrating part penetrating holder body 3. Therefore, holder body 3 transmits light through window 38. Window 38 is provided at a position facing display unit 63 of capacitor 6. Window 38 is not limited to the penetrating part penetrating holder body 3 and may be formed of a member having translucency (acrylic resin or the like).

Display unit 63 is visually recognized through window 38. In Fig. 1, display unit 63 indicating the polarity of capacitor 6 is visually recognized through window 38. That is, the side on which display unit 63 having a band shape visually recognized in Fig. 1 is provided is the negative terminal side of capacitor 6. The opposite side (see Fig. 2) is the positive terminal side, and display unit 63 having a band shape is not provided. By providing display unit 63 and window 38 in this manner, the polarity of each capacitor 6 can be checked even in a state where the plurality of capacitors 6 is held by electronic component holder 2.

Since window 38 is a penetrating part penetrating holder body 3, each capacitor 6 can release heat through window 38.

Electronic component holder 2 includes a plurality of (six in Fig. 6) fixing parts 21. Each fixing part 21 is, for example, a metal pin. Each fixing part 21 has a T shape (see Fig. 1). Each fixing part 21 is provided on the rear face (the face facing substrate 5) of holder body 3. A part of each fixing part 21 is embedded in holder body 3 and protrudes rearward from holder body 3. Each fixing part 21 is formed integrally with holder body 3 by, for example, insert molding.

Substrate 5 includes a plurality of attachment holes. The plurality of attachment holes correspond to the plurality of fixing parts 21 on a one-to-one basis. The distal end of each of the plurality of fixing parts 21 is inserted into the corresponding attachment hole and soldered to substrate 5 by solder applied to second face 52.

Both the plurality of electronic components E1 and electronic component holder 2 are fixed to substrate 5 by soldering. Therefore, the plurality of electronic components E1 and electronic component holder 2 can be fixed to substrate 5 in the same process. This can reduce the number of steps as compared with the case where the process of fixing the plurality of electronic components E1 to substrate 5 is different from the process of fixing electronic component holder 2 to substrate 5. In the process of fixing the plurality of electronic components E1 and electronic component holder 2 to substrate 5 by soldering, connector 55 can also be fixed to substrate 5 by soldering.

Here, when electronic component E1 including an explosion-proof valve is referred to as a specific electronic component, capacitor 6 including explosion-proof valve 62 is the specific electronic component. When container recess 4 in which the specific electronic component is held is referred to as a specific container recess, first container recess 4A in which capacitor 6 is held is the specific container recess. Bottom face 41 of first container recess 4A is closed and faces explosion-proof valve 62 of capacitor 6. Here, "closed" means that no hole or the like is present. Since bottom face 41 is closed, it is possible to suppress leakage of air or the like from bottom face 41. It is possible to reduce the amount of oxygen supplied around explosion-proof valve 62 when explosion-proof valve 62 opens, as compared with the case where a hole is provided in bottom face 41. Therefore, the possibility that the gas emitted from explosion-proof valve 62 ignites can be reduced, and the possibility that the gas continues to burn can be reduced even when the gas ignites.

First container recess 4A (specific container recess) holds capacitor 6 (specific electronic component) with a gap between bottom face 41 and explosion-proof valve 62. That is, a gap is provided so that explosion-proof valve 62 smoothly opens. More specifically, holder body 3 includes protrusion 33 protruding from bottom face 41 of first container recess 4A (specific container recess), and a gap is secured between bottom face 41 and explosion-proof valve 62 by protrusion 33. In addition, the length from the rear end (the contact surface with substrate 5) of holder body 3 to bottom face 41 being longer than the height (the length in the front-rear direction) of capacitor 6 secures a gap between bottom face 41 and explosion-proof valve 62.

The gap between top face 601 (explosion-proof valve 62) and bottom face 41 of capacitor 6 is larger than the gap between side face 602 and inner side face 42. This can reduce the possibility of interference between explosion-proof valve 62 and bottom face 41.

As viewed from the thickness direction of substrate 5 (more specifically, as viewed from the front), holder body 3 covers the whole of each of the plurality of electronic components E1. This can protect the plurality of electronic components E1. Since holder body 3 has electrical insulation and covers the whole of each of the plurality of electronic components E1 as viewed from the front, it is possible to enhance insulation between the plurality of electronic components E1 and a configuration provided in front of holder body 3 as compared with the case where the plurality of electronic components E1 are not covered with holder body 3 as viewed from the front.

### (4) Disposition

As illustrated in Fig. 4, the plurality of (four) first container recesses 4A are arranged along the up-down direction as a whole. As a result, a plurality of (four) capacitors 6 are arranged along the up-down direction as a whole. Here, one first container recess 4A (third first container recess 4A from the top) among four first container recesses 4A is disposed to be shifted to the right with respect to remaining three first container recesses 4A. Accordingly, one capacitor 6 among four capacitors 6 (third capacitor 6 from the top) is disposed to be shifted to the right with respect to remaining three capacitors 6.

When three or more capacitors 6 are held in the plurality of first container recesses 4A, reference point G1 of each of three or more capacitors 6 is defined as the center of gravity of capacitor 6 or the center of gravity of the plurality of leads 61 included in capacitor 6 as viewed from the thickness direction of substrate 5. In the present exemplary embodiment, the number of first container recesses 4A and the number of capacitors 6 are four, respectively. That is, when four capacitors 6 are held in four first container recesses 4A, reference point G1 of each of four capacitors 6 is defined as the center of gravity of capacitor 6 or the center of gravity of the plurality of leads 61 included in capacitor 6 as viewed from the thickness direction of substrate 5. The center of gravity may be a spatial center of gravity or a center of gravity in consideration of mass (center of mass). In the present exemplary embodiment, the spatial center of gravity and the center of mass coincide with each other. Further, the center of gravity of capacitor 6 and the centers of gravity of the plurality of leads 61 coincide with each other.

As viewed from the thickness direction of substrate 5, reference point G1 of another capacitor 6 (fourth capacitor 6 from the top) is on straight line SL1 connecting reference points G1 of two capacitors 6 (first and second capacitors 6 from the top) among four capacitors 6. As viewed from the thickness direction of substrate 5, reference point G1 of remaining one capacitor 6 (third capacitor 6 from the top) is at a position different from a position on straight line SL1.

Disposing four capacitors 6 in this manner can reduce the possibility that each capacitor 6 simultaneously vibrates in the same direction to cause resonance as compared with the case where reference points G1 of four capacitors 6 are located on straight line SL1. That is, when vibration is applied to substrate 5 or electronic component holder 2, capacitors 6 are more likely to vibrate at different timings and in different directions than when reference points G1 of four capacitors 6 are on straight line SL1. Therefore, vibration resistance of each capacitor 6 can improve.

In addition, reference point G1 of each of two resistors 7 is defined as the center of gravity of resistor 7 or the center of gravity of the plurality of leads 71 included in resistor 7. The center of gravity of resistor 7 and the center of gravity of the plurality of leads 71 coincide with each other. As viewed from the thickness direction of substrate 5, reference point G1 of each of two resistors 7 is at a position different from a position on straight line SL1.

Two leads 61 of capacitor 6 easily fold down and break in a direction (up-down direction) orthogonal to the direction (left-right direction) in which two leads 61 are arranged. Here, four first container recesses 4A are arranged along a direction (up-down direction) orthogonal to the direction (left-right direction) in which two leads 61 of capacitor 6 are arranged. Therefore, when vibration in the up-down direction is applied to substrate 5 or electronic component holder 2, the plurality of capacitors 6 support each other, and the vibration of the plurality of capacitors 6 can be reduced. Therefore, it is possible to reduce the possibility that two leads 61 break. In the present exemplary embodiment, a part of each of four first container recesses 4A exists on the same straight line (for example, on straight line SL1).

### (5) Electrical device

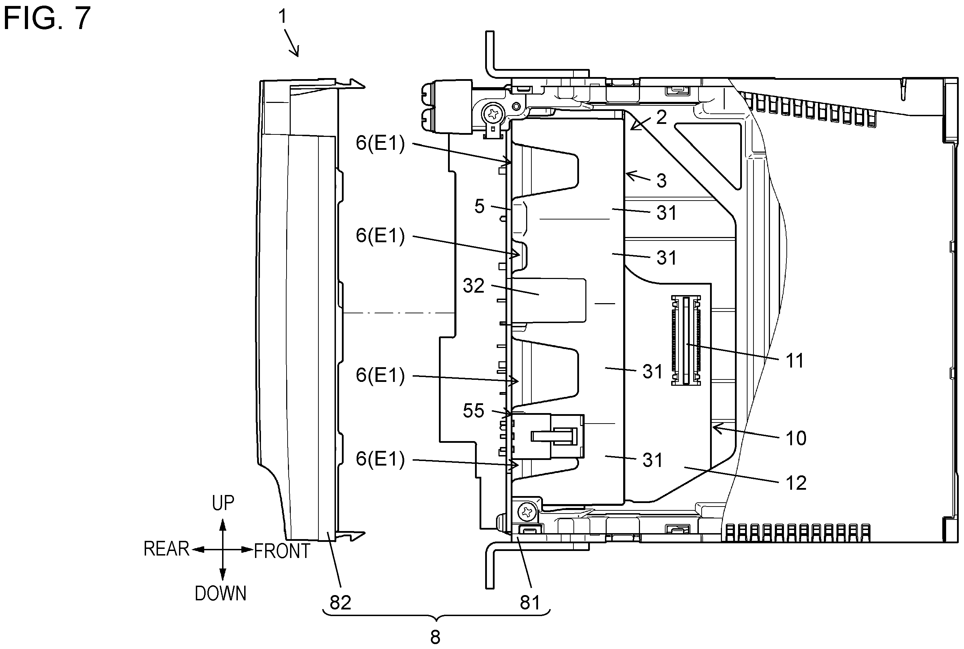

Fig. 7 is a right side view of electrical device 1 including electronic component holder 2 according to the exemplary embodiment. As illustrated in Fig. 7, electrical device 1 includes electronic component holder 2, substrate 5, and a plurality of electronic components E1. Electrical device 1 is a servo amplifier. The servo amplifier controls the operation of a servomotor. More specifically, the servo amplifier controls the operation of the servomotor by supplying electric power to the servomotor based on an operation command from a host controller and a feedback value such as a rotation angle, a speed, and a torque of the servomotor. Electrical device 1 includes control circuit 10 for achieving a function as a servo amplifier. Control circuit 10 includes a plurality of electronic components E1 and a plurality of circuit boards 11 and 12.

Electrical device 1 further includes housing 8. Housing 8 contains electronic component holder 2, substrate 5, and the plurality of electronic components E1. Housing 8 includes body 81 and cover 82. Body 81 is formed in a box shape with an open rear face. Cover 82 covers the rear face of body 81.

As an example, substrate 5 is disposed such that the longitudinal direction thereof is along the vertical direction (up-down direction).

Housing 8 is formed of, for example, aluminum as a material. Providing electronic component holder 2 can enhance insulation between the plurality of electronic components E1 and housing 8, and the plurality of circuit boards 11 and 12 as compared with the case where there is no electronic component holder 2.

### (6) Advantages

When Electrical device 1 moves, for example, each of the plurality of electronic components E1 of electrical device 1 may vibrate. Vibrating of each of the plurality of electronic components E1 may cause adverse effects such as folding down and breakage of a part (for example, lead 61 or 71) of the plurality of electronic components E1. Here, when each electronic component E1 vibrates, the degree of possibility of breakage of a part of electronic component E1 varies depending on vibration frequency. For certain electronic component E1, a vibration frequency at which a part of electronic component E1 is relatively likely to break is referred to as a unique vibration frequency of electronic component E1. The unique vibration frequency is determined by the shape of electronic component E1, the position on substrate 5, the position of the support point of electronic component E1 on substrate 5, the fixing means to substrate 5, and the like.

The plurality of electronic components E1 are held by single electronic component holder 2. Therefore, the plurality of electronic components E1 support each other, and the vibration of the plurality of electronic components E1 can be reduced. When the plurality of electronic components E1 support each other, the vibration of the unique vibration frequency can be canceled. In this manner, it is possible to improve the vibration resistance of the plurality of electronic components E1. For example, it is possible to improve the vibration resistance of the plurality of electronic components E1 under an environment in which vibration can be applied to the entire system including electrical device 1 (servo amplifier) and a servomotor. In addition, it is possible to improve the vibration resistance of the plurality of electronic components E1 when vibration of the servomotor propagates to electrical device 1.

Further, the present exemplary embodiment can hold the plurality of electronic components E1 by simple means of covering the plurality of electronic components E1 with electronic component holder 2.

### (Modifications of exemplary embodiment)

Hereinafter, modifications of the exemplary embodiment will be listed. The following modifications may be achieved by appropriately combining them.

At least some container recesses 4 among the plurality of container recesses 4 may hold two or more electronic components E1.

The number of container recesses 4, electronic components E1, fixing parts 21, and the like in the exemplary embodiment is an example, and can be appropriately changed.

Electronic component E1 is not limited to capacitor 6 and resistor 7. Electronic component E1 may be, for example, a semiconductor element, a switch element, a coil, or the like.

Holder body 3 may cover the whole of the plurality of electronic components E1 together with substrate 5. That is, substrate 5 may cover the plurality of electronic components E1 from behind, and holder body 3 may cover the plurality of electronic components E1 from the front, left, right, top, and bottom.

The means for fixing electronic component holder 2 to substrate 5 is not limited to soldering, and may be, for example, bonding, fitting, or crimping. However, it is preferable to use soldering as the means because electronic component E1 and fixing part 21 can be fixed to substrate 5 by the same process involving soldering. The configuration of fixing part 21 can be appropriately changed according to the means for fixing electronic component holder 2 to substrate 5.

The directions of the plurality of electronic components E1 are not limited to the directions described in the exemplary embodiment. For example, the direction in which two leads 61 included in each capacitor 6 are arranged may be made different between capacitors 6 adjacent to each other. For example, two leads 61 may be arranged vertically in certain capacitor 6, and two leads 61 may be arranged horizontally in one or two capacitors 6 adjacent to certain capacitor 6.

The outer shape of electronic component body 60 is not limited to a circular column shape. Electronic component body 60 may have a shape in which the length in a first direction is shorter than the length in a second direction orthogonal to the first direction as viewed from the thickness direction of substrate 5. Electronic component body 60 may have, for example, a rectangular parallelepiped shape. Here, the first direction is preferably along the direction (up-down direction in the exemplary embodiment) in which the plurality of first container recesses 4A are arranged. This can shorten the longest length of electronic component holder 2 and reduce the magnitude of vibration generated in the plurality of electronic components E1.

### (Conclusion)

The following aspects are disclosed from the above-described exemplary embodiment and the like.

Electronic component holder (2) according to a first aspect includes fixing part (21) and holder body (3). Fixing pare (21) is fixed to substrate (5). Holder body (3) includes a plurality of container recesses (4). The plurality of container recesses (4) are open towards one surface (first face 51) of substrate (5). A plurality of electronic components (E1) are fixed to substrate (5). The plurality of electronic components (E1) are disposed to the one surface of substrate (5). Each of the plurality of container recesses (4) holds at least one corresponding electronic component (E1) among the plurality of electronic components (E1).

The above configuration can improve the vibration resistance of the plurality of electronic components (E1).

In electronic component holder (2) according to a second aspect, three or more electronic components (E1) are disposed as the plurality of electronic components (E1) on the one surface (first face 51) of substrate (5) in the first aspect. When three or more electronic components (E1) are held in the plurality of container recesses (4), reference point (G1) of each of the three or more electronic components (E1) is defined as a center of gravity of electronic component (E1) or a center of gravity of one or a plurality of leads (61, 71) included in electronic component (E1) as viewed from the thickness direction of substrate (5). Reference point (G1) of at least one electronic component (E1) among the three or more electronic components (E1) is located at a position different from a position on straight line (SL1) connecting reference point (G1) of each of two electronic components (E1) of the three or more electronic components (E1).

The above configuration can reduce the possibility that electronic components (E1) vibrate simultaneously in the same direction to cause resonance as compared with the case where reference points (G1) of all electronic components (E1) are located on straight line (SL1). Therefore, the vibration resistance of each electronic component (E1) can further improve.

In electronic component holder (2) according to a third aspect, the plurality of electronic components (E1) include a specific electronic component (capacitor 6) including explosion-proof valve (62) in the first or second aspect. Bottom face (41) of a specific container recess (first container recess 4A) in which the specific electronic component is held among the plurality of container recesses (4) is closed and faces explosion-proof valve (62).

The above configuration can reduce the amount of oxygen supplied around explosion-proof valve (62) when explosion-proof valve (62) opens as compared with the case where a hole is provided in bottom face (41). Therefore, the possibility that the gas emitted from explosion-proof valve (62) ignites can be reduced, and the possibility that the gas continues to burn can be reduced even when the gas ignites.

In electronic component holder (2) according to a fourth aspect, the specific container recess (first container recess 4A) holds the specific electronic component (capacitor 6) with a gap between bottom face (41) and explosion-proof valve (62) in the third aspect.

The above configuration can reduce the possibility that explosion-proof valve (62) interferes with bottom face (41) of the specific container recess (first container recess 4A) when explosion-proof valve (62) opens.

In electronic component holder (2) according to a fifth aspect, holder body (3) includes protrusion (33) in the fourth aspect. Protrusion (33) protrudes from bottom face (41) of the specific container recess (first container recess 4A).

The above configuration increases the possibility that a gap between explosion-proof valve (62) and bottom face (41) of the specific container recess (first container recess 4A) can be secured.

In electronic component holder (2) according to a sixth aspect, holder body (3) includes side face (302) in any one of the first to fifth aspects. Side face (302) has a length across both ends of the plurality of electronic components (E1) in the thickness direction of substrate (5) and covers the plurality of electronic components (E1).

The above configuration can protect the plurality of electronic components (E1).

In electronic component holder (2) according to a seventh aspect, at least one electronic component (E1) among the plurality of electronic components (E1) includes display unit (63) in the sixth aspect. Display unit (63) includes a predetermined display. Side face (302) includes window (38) at a position facing display unit (63). Window (38) transmits light.

The above configuration enables display unit (63) to be visually recognized even when each of the plurality of electronic components (E1) is held in container recess (4).

In electronic component holder (2) according to an eighth aspect, the plurality of electronic components (E1) include a first electronic component (capacitor 6) and a second electronic component (resistor 7) in any one of the first to seventh aspects. The second electronic component is different in shape from the first electronic component. The plurality of container recesses (4) include first container recess (4A) that holds the first electronic component and second container recess (4B) that holds the second electronic component.

According to the above configuration, one electronic component holder (2) can hold both first electronic component (capacitor 6) and second electronic component (resistor 7).

In electronic component holder (2) according to a ninth aspect, fixing part (21) is fixed to substrate (5) by soldering in any one of the first to eighth aspects.

The above configuration enables electronic component (E1) and fixing part (21) to be fixed to substrate (5) by the same process involving soldering when at least some of the plurality of electronic components (E1) are fixed to substrate (5) by soldering.

In electronic component holder (2) according to a tenth aspect, the plurality of electronic components (E1) include a lead component (capacitor 6) in any one of the first to ninth aspects. The lead component includes two leads (61). Among the plurality of container recesses (4), two or more container recesses (4) including container recess (4) that holds the lead component are arranged along a direction orthogonal to a direction in which two leads (61) are arranged.

According to the above configuration, the plurality of electronic components (E1) being arranged can suppress vibration in a direction in which the plurality of electronic components (E1) are arranged. The direction in which the plurality of electronic components (E1) are arranged substantially coincides with the direction in which each lead (61) is easily folded down and broken. Therefore, the possibility that each lead (61) break can be reduced.

In electronic component holder (2) according to an eleventh aspect, holder body (3) covers a whole of the plurality of electronic components (E1) as viewed in the thickness direction of substrate (5) in any one of the first to tenth aspects.

The above configuration can protect the plurality of electronic components (E1).

In electronic component holder (2) according to a twelfth aspect, holder body (3) is formed of resin as a material in any one of the first to eleventh aspects.

The above configuration allows an easy moldering of holder body (3).

In electronic component holder (2) according to a thirteenth aspect, the plurality of electronic components (E1) include a lead component (capacitor 6 and resistor 7) in any one of the first to twelfth aspect. The lead component includes electronic component body (60, 70) including pull-out face (603, 703) and lead (61, 71) protruding from pull-out face (603, 703). Among the plurality of container recesses (4), container recess (4) that holds the lead component holds electronic component body (60, 70) in a direction in which pull-out face (603, 703) faces the one surface (first face 51) of substrate (5).

The above configuration can eliminate bending of one or a plurality of leads (61, 71) or reduce bending portions. Therefore, the possibility that one or a plurality of leads (61, 71) break can be reduced.

In electronic component holder (2) according to a fourteenth aspect, a corresponding one electronic component (E1) among the plurality of electronic components (E1) is held in each of the plurality of container recesses (4) in any one of the first to thirteenth aspect.

The above configuration can further improve the vibration resistance of the plurality of electronic components (E1).

The configuration other than the first aspect is not essential for electronic component holder (2) and can be omitted as appropriate.

Electrical device (1) according to a fifteenth aspect includes electronic component holder (2) according to any one of first to fourteenth aspects, substrate (5), and the plurality of electronic components (E1).

The above configuration can improve the vibration resistance of the plurality of electronic components (E1).

Electrical device (1) according to a sixteenth aspect is a servo amplifier that controls an operation of a servomotor in the fifteenth aspect.

The above configuration can improve the vibration resistance of the plurality of electronic components (E1).

### REFERENCE MARKS IN THE DRAWINGS

- 1: electrical device

- 2: electronic component holder
- 3: holder body
- 4: container recess
- 4A: first container recess (specific container recess)
- 4B: second container recess
- 5: substrate
- 6: capacitor (specific electronic component, first electronic component, lead component)
- 7: resistor (second electronic component, lead component)
- 8: housing
- 10: control circuit
- 11: circuit board
- 12: circuit board
- 21: fixing part
- 31: first container
- 32: second container
- 33: protrusion
- 34: first partition wall
- 35: second partition wall
- 36: first rib
- 37: second rib
- 38: window
- 41: bottom face
- 42: inner side face
- 43: bottom face
- 44: inner side face
- 51: first face (one surface)
- 52: second face
- 55: connector
- 60: electronic component body (package)
- 61: lead
- 62: explosion-proof valve
- 63: display unit
- 64: sealing member
- 70: electronic component body
- 71: lead
- 81: body
- 82: cover
- 302: side face
- 550: terminal block
- 551: lead
- 601: top face
- 602: side face
- 603: pull-out face
- 604: opening
- 703: pull-out face
- E1: electronic component
- G1: reference point
- SL 1: straight line

## Claims

1. An electronic component holder comprising:
a fixing part fixed to a substrate; and
a holder body including a plurality of container recesses that are open towards one surface of the substrate,
wherein each of the plurality of container recesses holds at least one corresponding electronic component among a plurality of electronic components disposed on the one surface of the substrate and fixed to the substrate.

2. The electronic component holder according to Claim 1, wherein
three or more electronic components are disposed as the plurality of electronic components on the one surface of the substrate, and
when the three or more electronic components are held in the plurality of container recesses, defining a reference point of each of the three or more electronic components as a center of gravity of the electronic component or a center of gravity of one or a plurality of leads included in the electronic component as viewed from a thickness direction of the substrate, the reference point of at least one electronic component among the three or more electronic components is at a position different from a position on a straight line connecting the reference point of each of two electronic components of the three or more electronic components.

3. The electronic component holder according to Claim 1 or 2, wherein
the plurality of electronic components include a specific electronic component including an explosion-proof valve, and
a bottom face of a specific container recess in which the specific electronic component is held among the plurality of container recesses is closed and faces the explosion-proof valve.

4. The electronic component holder according to Claim 3, wherein the specific container recess holds the specific electronic component with a gap between the bottom face and the explosion-proof valve.

5. The electronic component holder according to Claim 4, wherein the holder body includes a protrusion protruding from the bottom face of the specific container recess.

6. The electronic component holder according to any one of Claims 1 to 5, wherein the holder body includes a side face having a length across both ends of the plurality of electronic components in the thickness direction of the substrate, the side face covering the plurality of electronic components.

7. The electronic component holder according to Claim 6, wherein at least one electronic component among the plurality of electronic components includes a display unit including a predetermined display, and the side face includes a window that transmits light at a position facing the display unit.

8. The electronic component holder according to any one of Claims 1 to 7, wherein
the plurality of electronic components include a first electronic component and a second electronic component different in shape from the first electronic component, and
the plurality of container recesses include a first container recess that holds the first electronic component and a second container recess that holds the second electronic component.

9. The electronic component holder according to any one of Claims 1 to 8, wherein the fixing part is fixed to the substrate by soldering.

10. The electronic component holder according to any one of Claims 1 to 9, wherein
the plurality of electronic components include a lead component that includes two leads, and
among the plurality of container recesses, two or more container recesses including a container recess that holds the lead component are arranged along a direction orthogonal to a direction in which the two leads are arranged.

11. The electronic component holder according to any one of Claims 1 to 10, wherein the holder body covers a whole of the plurality of electronic components as viewed in the thickness direction of the substrate.

12. The electronic component holder according to any one of Claims 1 to 11, wherein the holder body is formed of resin as a material.

13. The electronic component holder according to any one of Claims 1 to 12, wherein
the plurality of electronic components include the lead component that includes an electronic component body having a pull-out face and a lead protruding from the pull-out face, and
among the plurality of container recesses, a container recess that holds the lead component holds the electronic component body in a direction in which the pull-out face faces the one surface of the substrate.

14. The electronic component holder according to any one of Claims 1 to 13, wherein a corresponding one electronic component among the plurality of electronic components is held in each of the plurality of container recesses.

15. An electrical device comprising:
the electronic component holder according to any one of Claims 1 to 14;
the substrate; and
the plurality of electronic components.

16. The electrical device according to Claim 15, the electrical device being a servo amplifier that controls an operation of a servomotor.
